# EUROPEAN PATENT APPLICATION

(11) **EP 4 502 430 A1**
(43) Date of publication of application: **05.02.2025**
(21) Application number: 23779176.9
(22) Date of filing: 01.03.2023
(51) Int. Cl.: F16J 15/06, F16J 15/10, B01D 46/10

(54) **AIR FILTER**

(30) Priority: 31.03.2022 JP 2022060008
(71) Applicant: Nippon Muki Co., Ltd., Taitou-ku Tokyo 110-0015 (JP)
(72) Inventor: KARATSU, Wataru, Yuki-shi, Ibaraki 307-0046 (JP)
(74) Representative: Körfer, Thomas
(86) International application number: PCT/JP2023/007617
(87) International publication number: WO 2023/189146

(57) **Abstract**

[Problem] To provide an air filter capable of ensuring airtightness.

[Solution] An air filter includes a filter body that has a rectangular shape having four sides, a filter frame that has a rectangular shape having four sides, and surrounds the filter body, and a gasket 6 that is disposed between the filter frame and the filter body along the four sides of the filter body, and has a set of end portions joined at at least one corner portion of the four sides. One end portion 6b of the set of end portions has a convex portion 21 that protrudes toward the other end portion 6a of the set of end portions, and the other end portion 6a of the set of end portions has a concave portion 22 that mates with the convex portion 21.

## Description

### Technical Field

The present invention relates to an air filter.

### Background Art

An air filter has a filter body and a filter frame that surrounds the filter body. The filter body is in close contact with the filter frame via a gasket at the contact face with the filter frame. This ensures airtightness between the filter body and the filter frame.

### Citation List

### Patent Literature

PTL 1: JP2008-6416A

### Summary of Invention

### Technical Problem

A gasket has a rectangular frame-like shape with dimensions that match the external dimensions of a filter body. Such a gasket is easily subjected to a load due to vibrations generated, for example, when a filter body is attached to a filter frame or when an air filter is transported. This may cause the gasket to shift or twist from its designed position, resulting in insufficient airtightness.

The invention has been made in consideration of such circumstances, and an object of the invention is to provide an air filter capable of ensuring airtightness.

### Solution to Problem

In order to solve the above-mentioned problem, an air filter according to the invention includes a filter body that has a rectangular shape having four sides, a filter frame that has a rectangular shape having four sides, and surrounds the filter body, and a gasket that is disposed between the filter frame and the filter body along the four sides of the filter body, and has a set of end portions joined at at least one corner portion of the four sides, in which one end portion of the set has a convex portion that protrudes toward the other end portion of the set, and the other end portion of the set has a concave portion that mates with the convex portion.

### Advantageous Effects of Invention

In the air filter according to the invention, airtightness can be ensured.

### Brief Description of Drawings

[FIG. 1] FIG. 1 is an external view of an air filter according to this embodiment.
[FIG. 2] FIG. 2 is a cross-sectional view of the air filter in Fig. 1 along the vertical direction.
[FIG. 3] FIG. 3 is a view specifically showing a set of end portions at a corner portion of a gasket as a comparative example.
[FIG. 4] FIG. 4 is a view specifically showing a set of end portions at a corner portion of a gasket included in an air filter in this embodiment.
[FIG. 5] FIG. 5 is a view specifically showing a set of end portions at a corner portion of a gasket included in an air filter as a modification.
[FIG. 6] FIG. 6 is a view specifically showing a set of end portions at a corner portion of a gasket included in an air filter as another modification.
[FIG. 7] FIG. 7 is a view specifically showing a set of end portions at a corner portion of a gasket included in an air filter as still another modification.

### Description of Embodiments

Embodiments of the air filter according to the invention will be described with reference to the attached drawings. The air filter according to the invention can be applied to air filters in various forms using a gasket. In this embodiment, the air filter according to the invention will be described using an example in which it is applied to an air filter for high temperature use.

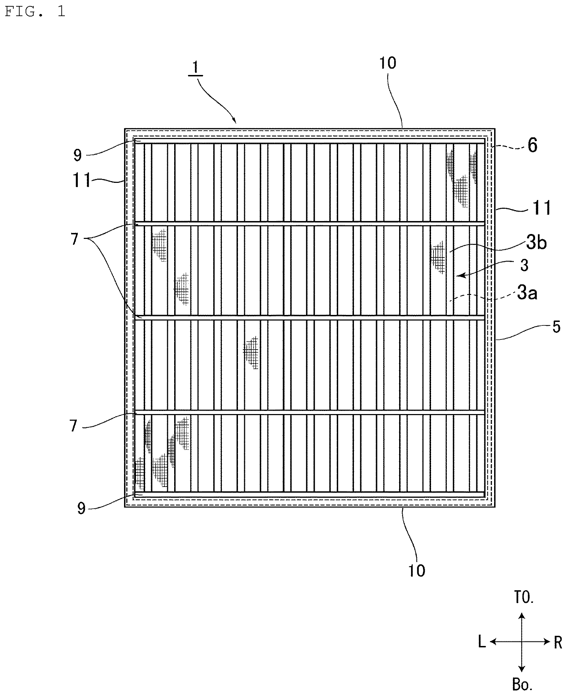

FIG. 1 is an external view of an air filter 1 according to this embodiment.

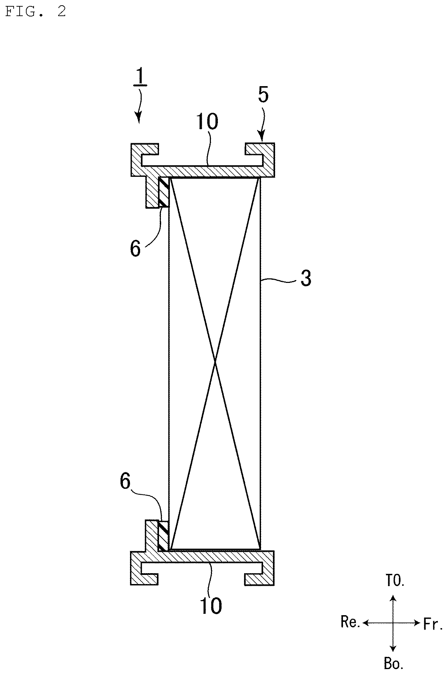

FIG. 2 is a cross-sectional view of the air filter 1 in Fig. 1 along the vertical direction.

In the following description, "front", "rear", "top", "bottom", "right", and "left" follow the definitions in Figs. 1 and 2. Further, "front" refers to the upstream side, "rear" refers to the downstream side, and the direction from front to rear is the direction of airflow.

The air filter 1 includes a filter body 3 and a filter frame 5.

The filter body 3 has a rectangular shape that extends in the vertical direction and the horizontal direction and has four sides orthogonal to each other when viewed in the front-rear direction. The filter body 3 includes a filter medium 3a and a heat-resistant mesh body 3b. The filter body 3 is formed by folding in a zigzag shape in a state where both faces of the filter medium 3a are sandwiched by the heat-resistant mesh body 3b.

The filter medium 3a is made of, for example, a molded sheet of a glass fiber containing no binder and having a softening point of 750 to 1,100° C. The glass fiber is preferably a short fiber of E-glass, S-glass, C-glass, or the like. The glass fiber has a fiber diameter of 0.1 to 3.0 um and an average fiber diameter of 0.58 to 0.68 um. Further, the glass fiber has a density of 25 to 28 kg/m³. The heat-resistant mesh body 3b is made of stainless steel or another metal that can withstand high temperatures, a heat-resistant synthetic resin, or the like. The pressure loss of the heat-resistant mesh body 3b is preferably as low as possible. Further, it is preferred that the mesh size of the heat-resistant mesh body 3b is fine enough to be able to reliably hold the filter medium 3a.

The filter frame 5 includes a pair of upper and lower frames 10 that cover the upper and lower side faces of the filter body 3, and a pair of side frames 11 that cover the left and right side faces of the filter body 3. The filter frame 5 has a rectangular shape that extends in the vertical direction and the horizontal direction and has four sides orthogonal to each other when viewed in the front-rear direction. The filter frame 5 is made of, for example, a metal such as stainless steel that can withstand high temperatures, a heat-resistant synthetic resin, or the like.

A heat-resistant sealing material (not shown) that maintains airtightness between the filter frame 5 and the filter body 3 by a buffering effect is disposed on opposing faces of the filter frame 5 and the filter body 3. The filter body 3 is fixed to the filter frame 5 via this heat-resistant sealing material. Further, the filter body 3 may be fixed to the filter frame 5 by a fixing unit such as a bolt.

The air filter 1 further includes a stabilizer 7, a presser plate 9, and a gasket 6.

The stabilizer 7 is a comb-shaped spacer that maintains the zigzag-shaped space in the horizontal direction of the filter body 3. The stabilizer 7 is made of a pair of members inserted from the front and rear of the filter body 3, that is, from the upstream side and the downstream side of airflow. The stabilizers 7 are inserted into the filter body 3 and disposed so as to mate with each other via the filter body 3. The stabilizers 7 are disposed in multiple pairs (three pairs in FIG. 1) at regular intervals in the vertical direction of the filter body 3.

The presser plates 9 are comb-shaped members that are disposed at the upper and lower edge portions of the filter body 3 and are in contact with the front and rear faces of the filter body 3, that is, the faces on the upstream and downstream sides of airflow. The presser plates 9 are inserted into the zigzag-shaped space of the filter body 3, and crimp the filter body 3 and the upper and lower frames 10 via the above-mentioned heat-resistant sealing material to maintain airtightness therebetween.

The gasket 6 is a frame-shaped member disposed along the four sides of the filter body 3 between the face on the downstream side of the filter body 3 and the filter frame 5 that comes in contact with this face. The gasket 6 maintains airtightness between the filter body 3 and the filter frame 5. The gasket 6 is made of, for example, a glass paper, a chloroprene-based rubber, an ethylene-based rubber, a silicone, or PTFE (polytetrafluoroethylene). When an adhesive or the like cannot be used due to the usage environment of a filter for high temperature use, the gasket 6 is supported only by friction due to surface contact without providing any special fixing unit between the filter body 3 and the filter frame 5.

The gasket 6 has joints at at least one corner portion of the four sides that form a frame shape. That is, the gasket 6 is made of two to four members separated at two to four corner portions, or one member separated at one corner portion. The gasket 6 is disposed at a contact place with the filter frame 5 and the filter body 3 in a state where the end portions of a corresponding set are joined so that such one or multiple members form a frame shape.

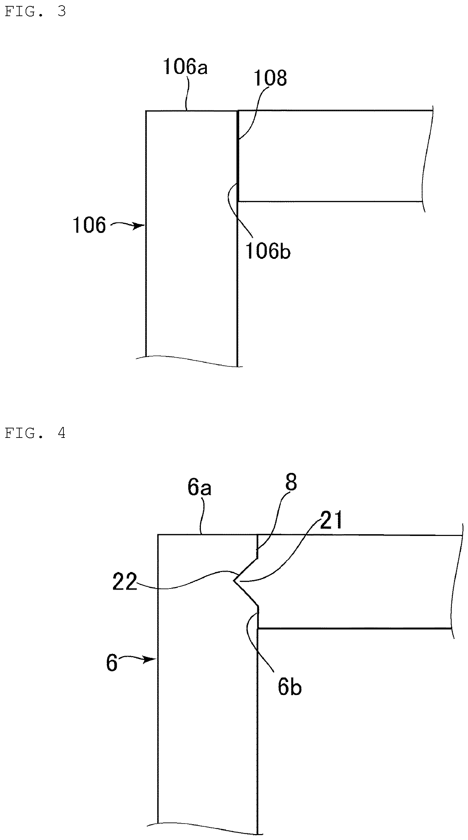

Here, FIG. 3 is a view specifically showing a set of end portions at a corner portion of a gasket 106 as a comparative example.

In the gasket 106 as a comparative example, one end portion 106a of a set of end portions is joined orthogonally to the other end portion 106b. In this case, an unintended load may be applied to the gasket 106 when the filter body and the filter frame are assembled in the step of producing the air filter. Further, when the air filter is packed or transported, vibrations may occur in the air filter, and the position of the gasket 106 may shift. In this case, joints 108 of the set of end portions may shift to form a gap between the end portion 106a and the end portion 106b.

Here, FIG. 4 is a view specifically showing a set of end portions at a corner portion of the gasket 6 included in the air filter 1 in this embodiment. In the air filter 1 in this embodiment has the gasket 6, one end portion 6b of the set of end portions has a convex portion 21 that protrudes toward the other end portion 6a, and the other end portion 6a has a concave portion 22 that mates with the convex portion 21, thereby reducing shift of joints 8.

The one end portion 6b of the gasket 6 has the convex portion 21 that has a substantially triangular shape. The other end portion 6a has the concave portion 22 that has substantially the same triangular shape as the convex portion 21 and mates with the convex portion 21. In the gasket 6, the end portions in one set mate with each other due to the concave and convex shapes. The end portions in one set are joined only by mating the convex portion 21 and the concave portion 22, and are not fixed to each other by an adhesive or other fixing units or the like. In such a gasket 6, even if a load that causes the end portions 6a and 6b to shift is applied to the corner portion of the gasket 6, it is possible to prevent the joints 8 from shifting to form a gap because the convex portion 21 and the concave portion 22 mate with each other to form a required locking relationship.

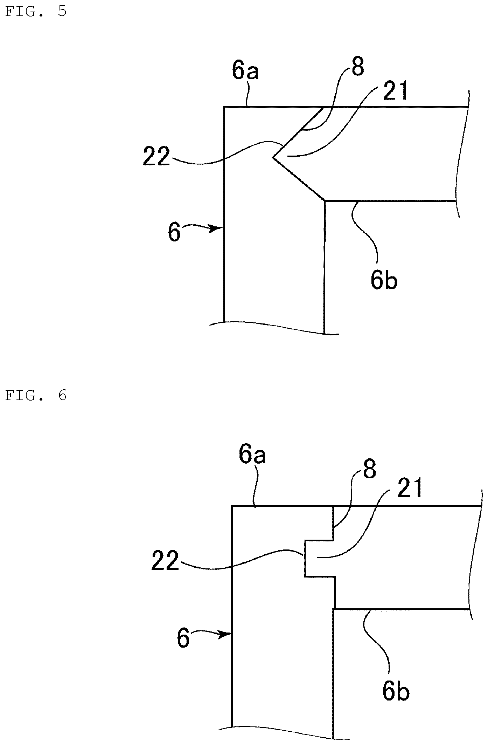

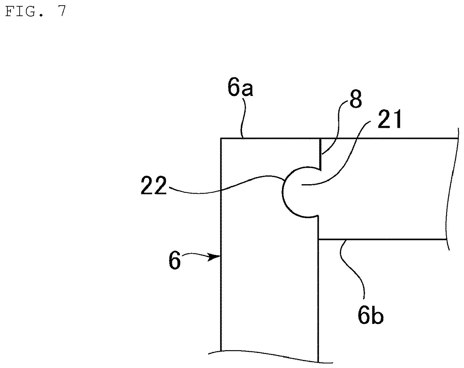

The shapes of the convex portion 21 and the concave portion 22 are not limited to the example in FIG. 4, and for example, as shown in FIG. 5, the dimensions of the convex portion 21 and the concave portion 22 with respect to the end portions 6a and 6b are not particularly limited. Further, for example, as shown in FIGS. 6 and 7, the shapes of the convex portion 21 and the concave portion 22 may be a circle or a polygon such as a rectangle, or a partial shape thereof. Further, the convex portion 21 protrudes to one side (to the left) along the extending direction of the side on which the end portion 6b is located (in FIGS. 4 to 7, the horizontal direction in the drawing), and the concave portion 22 is recessed to one side (to the left) orthogonal to the extending direction of the side on which the end portion 6a is located (vertical direction in the drawing). However, the concave and convex relationship may be reversed, and the convex portion 21 may protrude to one side (to the right) orthogonal to the extending direction of the side on which the end portion 6a is located, and the concave portion 22 may be recessed to one side (to the right) along the extending direction of the side on which the end portion 6b is located (horizontal direction in the drawing).

In such an air filter 1 of this embodiment, the joints 8 at the corner of the gasket 6 are joined by the convex portion 21 and the concave portion 22, so that it is possible to reduce the occurrence of an unintentional gap at the joints 8. Therefore, the air filter 1 can ensure the required airtightness.

Although several embodiments of the invention have been described, these embodiments are presented by way of example and are not intended to limit the scope of the claims. These novel embodiments can be implemented in various other forms, and various omissions, substitutions, and changes can be made without departing from the gist of the invention. These embodiments and their modifications are included within the scope and gist of the invention, as well as within the scope of the invention described in the claims and its equivalents.

### Reference Signs List

- 1:: air filter
- 3:: filter body
- 5:: filter frame
- 6:: gasket
- 6a, 6b:: end portion
- 7:: stabilizer
- 8:: joint
- 9:: presser plate
- 10:: upper and lower frames
- 11:: side frame
- 21:: convex portion
- 22:: concave portion

## Claims

1. An air filter, comprising:
a filter body that has a rectangular shape having four sides;
a filter frame that has a rectangular shape having four sides, and surrounds the filter body; and
a gasket that is disposed between the filter frame and the filter body along the four sides of the filter body, and has a set of end portions joined at at least one corner portion of the four sides, wherein
one end portion of the set has a convex portion that protrudes toward the other end portion of the set, and
the other end portion of the set has a concave portion that mates with the convex portion.

2. The air filter according to claim 1, wherein the convex portion has a circular shape or a polygonal shape.

3. The air filter according to claim 1, wherein the end portions of the set are joined only by mating the convex portion and the concave portion.
